# EUROPÄISCHE PATENTANMELDUNG

(11) **EP 0 748 106 A2**
(43) Veröffentlichungstag der Anmeldung: **11.12.1996**
(21) Anmeldenummer: 96201566.5
(22) Anmeldetag: 06.06.1996
(51) Int. Cl.: H04M 19/00

(54) **Telekommunikationsvorrichtung mit einem Endgerät mit Zusatzvorrichtung**

(30) Priorität: 08.06.1995 DE 19520877
(71) Anmelder: Philips Patentverwaltung GmbH, 22335 Hamburg (DE); PHILIPS ELECTRONICS N.V., 5621 BA Eindhoven (NL)
(72) Erfinder: Engelhardt, Jürgen, Dipl.-Ing. (FH), 90482 Nürnberg (DE); Ruprecht, Michael, Dipl.-Ing. (FH), 96450 Coburg (DE)
(74) Vertreter: Volmer, Georg, Dipl.-Ing.

(57) **Zusammenfassung**

Die Erfindung bezieht sich auf eine Telekommunikationsvorrichtung mit einem Endgerät (1) und einer Zusatzvorrichtung (2) zur Kopplung an eine Schnittstelle (4) des Endgeräts (1), die mindestens einen digitalen Ausgang (6) aufweist.

Um bei dieser Telekommunikationsvorrichtung eine fehlende Stromversorgung einer an die Schnittstelle des Telekommunikationsgerätes anschließbaren Zusatzvorrichtung mit möglichst geringem technischem Aufwand zu realieren, dient der digitale Ausgang (6) der Schnittstelle (4) zur Stromversorgung der Zusatzvorrichtung (2).

## Beschreibung

Die Erfindung bezieht sich auf eine Telekommunikationsvorrichtung mit einem Endgerät und einer Zusatzvorrichtung zur Kopplung an eine Schnittstelle des Endgeräts, die mindestens einen digitalen Ausgang aufweist.

Die Erfindung ist insbesondere für ISDN-Telefone anwendbar. Für diese Geräte ist eine AEI-Schnittstelle ("Additional Equipment Interface") in der Norm ETS 300245, Teil 4, Abschnitt 5 definiert, über die an die ISDN-Telefone Zusatzvorrichtungen anschließbar sind. Die AEI-Schnittstelle weißt zwei Anschlüsse auf, die als analoger Eingang und Ausgang dienen. Weiterhin sind zwei Anschlüsse vorgesehen, die als digitaler Eingang und Ausgang dienen. Über die AEI-Schnittstelle erfolgt allerdings keine Stromversorgung für angeschlossene Zusatzvorrichtungen, so daß solche Zusatzvorrichtungen eigene Stromversorgungsschaltungen aufweisen müssen. Insbesondere bei zusätzlichen Hör-/Sprecheinheiten, die über die AEI-Schnittstelle angeschlossen werden sollen, stellt sich das Problem einer fehlenden Stromversorgung für das Mikrophon der Hör-/Sprecheinheit.

Der Erfindung liegt die Aufgabe zugrunde, bei der Telekommunikationsvorrichtung der eingangs genannten Art eine fehlende Stromversorgung einer an die Schnittstelle des Telekommunikationsgerätes anschließbaren Zusatzvorrichtung mit möglichst geringem technischem Aufwand zu realieren.

Die Aufgabe wird dadurch gelöst, daß der digitale Ausgang der Schnittstelle zur Stromversorgung der Zusatzeinrichtung dient.

Der digitale Ausgang der Schnittstelle ist bei der vorliegenden Erfindung nicht zur Ausgabe von Digitalsignalen erforderlich und kann somit anderweitig verwendet werden. Wird der digitale Ausgang so programmiert, daß er den Ausgangszustand "High" erhält und daß an ihm gegenüber einem Massepotential eine Spannung anliegt, so kann aus dieser Spannung eine Versorgungsspannung abgeleitete werden, welche wiederum zur Stromversorgung der Zusatzvorrichtung dient. Bei einer solchen Telekommunikationsvorrichtung ist für die Zusatzvorrichtung keine eigene an eine Batterie oder eine Netzspannung angeschlossene Stromversorgungseinheit erforderlich.

Durch ein Schaltungsmodul, das Mittel zur Speicherung eines vom digitalen Ausgang der Schnittstelle gelieferten Stroms zur Erzeugung einer Versorgungsspannung für die Zusatzvorrichtung enthält, wird sichergestellt, daß die Strombelastung des digitalen Ausgangs der Schnittstelle begrenzt wird. Strombelastungsspitzen werden nicht direkt von dem digitalen Ausgang, sondern von den Stromspeichermitteln des Schaltungsmoduls geliefert.

In einer Ausgestaltung der Erfindung ist die im Schaltungsmodul erzeugte Versorgungsspannung zur Speisung eines Verstärkers vorgesehen, der zur Verstärkung von Mikrophonsignalen eines Mikrophons der Zusatzvorrichtung dient. In einer weiteren Ausgestaltung wird diese Versorgungsspannung zur Speisung des Mikrophons verwendet. Insbesondere eine Hör-/Sprecheinheit wird zum Anschluß an das Telekommunikationsendgerät als Zusatzvorrichtung verwendet. Bei dieser Anwendung muß sowohl die Speisung des Mikrophons der Hör-/Sprecheinheit als auch eine ausreichende Verstärkung von Mikrophonsignalen sichergestellt sein. Dieses ist auf die angegebene Weise sichergestellt. Dabei wird der Verstärker vorzugsweise auch im Schaltungsmodul angeordnet, das somit eine einfache Anschlußeinheit für die Zusatzvorrichtung (die Hör-/Sprecheinheit) bildet.

Bei ISDN-Telefonen steht als Schnittstelle eine nach ETS 300 245, Teil 4, Abschnitt 5 genormte AEI-Schnittstelle zur Verfügung, deren digitaler Ausgang für die Stromversorgung der Zusatzvorrichtung geeignet ist. Der digitale Ausgang wird dazu durch mit geringem Aufwand zu realisierende Softwaremodifikationen im Telekommunikationsendgerät auf den Spannungspegel "High" gelegt.

Die Erfindung betrifft auch ein Schaltungsmodul zum Anschluß an eine mindestens einen digitalen Ausgang aufweisende Schnittstelle eines Telekommunikationsendgerätes mit Mitteln zur Speicherung eines vom digitalen Ausgang gelieferten Stroms zur Erzeugung einer Versorgungsspannung für eine Zusatzvorrichtung des Telekommunikationsendgerätes mit den oben genannten Vorteilen.

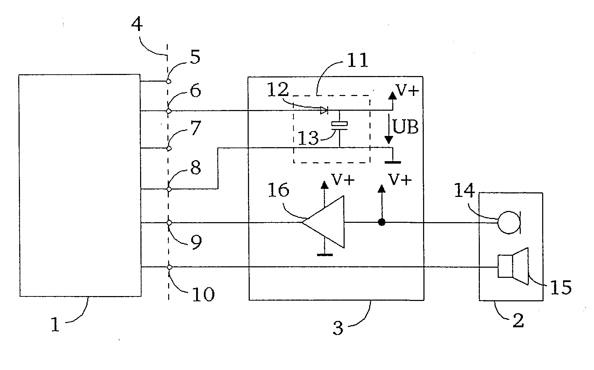

Die Erfindung wird im folgenden anhand der Zeichnung näher beschrieben.

Die Figur zeigt eine erfindungsgemäße Telekommunikationsvorrichtung.

Die dargestellte Telekommunikationsvorrichtung weist ein Telekommunikationsendgerät 1, eine Zusatzvorrichtung 2 und ein Schaltungsmodul 3 auf, über das die Zusatzvorrichtung 2 mit dem Telekommunikationsendgerät 1 gekoppelt ist. Das Telekommunikationsendgerät 1 ist im vorliegenden Fall ein ISDN-Telefon mit einer AEI-Schnittstelle 4 ("Additional Equipment Interface"), die zum Anschluß einer Zusatzvorrichtung vorgesehen ist. Die Schnittstelle 4 enthält sechs Anschlüsse 5 bis 10. Der Anschluß 5 ist ein digitaler Eingang, der für die Erfindung nicht relevant ist. Der Anschluß 6 ist ein digitaler Ausgang, der Anschluß 7 liefert ein Massepotential für den digitalen Eingang 5 und den digitalen Ausgang 6. Der Anschluß 8 liefert ein Massepotential für den analogen Eingang am Anschluß 9 und den analogen Ausgang am Anschluß 10 der AEI-Schnittstelle 4. Beide Masseanschlüsse 7 und 8 sind innerhalb des Teilnehmerendgeräts 1 miteinandert gekoppelt.

Das Schaltungsmodul 3 enthält eine Schaltungseinheit 11, deren zwei Eingänge mit den Anschlüssen 6 und 8 gekoppelt sind. Sie enthält Mittel zur Speicherung eines über die Anschlüsse 6 und 8 gelieferten Stroms und liefert an ihren beiden Ausgängen eine Versorgungsspannung UB, wobei an einem Ausgang das Potential V+ und an dem anderen Ausgang das Massepotential des Anschlusses 8 der AEI-Schnittstelle 4 anliegt. Im vorliegenden Fall sind die Stromspeichermittel der Schaltungseinheit 11 eine Diode 12 und ein Kondensator 13. Die Anode der Diode 12 ist mit dem Anschluß 6, deren Kathode mit dem das Potential V+ liefernden Ausgang der Schaltungseinheit 12 gekoppelt. Parallel zu den beiden Ausgängen der Schaltungseinheit 12 liegt der zur Stromspeicherung dienende Kondensator 13, der insbesondere ein Elektrolytkondensator ist.

Der Anschluß 6, d.h. der digitale Ausgang der AEI-Schnittstelle 4, wird bei der Erfindung nicht zur Lieferung eines unterschiedliche Spannungspegel aufweisenden Digitalsignals benötigt. Die AEI-Schnittstelle 4 wird nun so programmiert, daß der digitale Ausgang am Anschluß 6 auf das Spannungspotential "High" liegt. Über die Anschlüsse 6 und 8 wird auf diese Weise der Schaltungseinheit 11 des Schaltungsmoduls 3 ein Strom zugeführt, der im Kondensator 13 zwischengespeichert wird, so daß am Kondensator 13 bzw. den Ausgängen der Schaltungseinheit 11 die Versorgungsspannung UB erzeugt wird, durch die ein Laststrom lieferbar ist.

Die Zusatzvorrichtung 2 ist eine Hör-/Sprecheinheit, die ein Mikrofon 14, z. B. ein Elekretmikrophon, und einen Lautsprecher 15 enthält. Der Lautsprecher 15 ist mit dem Anschluß 10 der AEI-Schnittstelle 4 gekoppelt und wird über diesen Anschluß 10 mit analogen Audiosignalen versorgt. Außerdem wird dem Lautsprecher 15 das Massepotential des Anschlusses 8 als Bezugspotential zugeführt (zur Vereinfachung der Zeichnung nicht dargestellt). Die Spannungsversorgung des Mikrofons 14 erfolgt mit Hilfe der von der Schaltungseinheit 11 erzeugten Versorgungsspannung UB. Dazu wird dem Mikrofon 14 sowohl das Potential V+ als auch das zugehörige Massepotential des Anschlusses 8 zugeführt. Die Zuführung des Massepotentials zum Mikrophon 14 ist ebenfalls zur Vereinfachung der Zeichnung nicht dargestellt. Weiterhin ist zwischen dem Mikrofon 14 und dem Anschluß 9, d.h. dem analogen Eingang der AEI-Schnittstelle 4, ein Verstärker 16 angeordnet, der zur Verstärkung von Signalen dient, die vom Mikrofon 14 erzeugt werden. Die Spannungsversorgung des Verstärkers 16 erfolgt ebenfalls mit Hilfe der Versorgungsspannung UB.

Für die Zusatzvorrichtung 2 ist keine eigene Versorgungsspannungseinheit erforderlich, die aus einer Bauerie oder Netzspannung die Versorgungsspannung zum Betrieb der Zusatzvorrichtung 2 erzeugt. Das beschriebene Schaltungsmodul 3, das die Zusatzvorrichtung 2 mit der AEI-Schnittstelle 4 des Telekommunikationsendgerätes 1 koppelt, ist mit nur geringem technischen Aufwand kostengünstig herstellbar. Auch die Umprogrammierung des digitalen Ausgangs 6 ist durch geringfügige technische Maßnahmen möglich. Das Telekommunikationsendgerät 1 kann deshalb mit geringem technischen Aufwand und kostengünstig um die Zusatzvorrichtung 2 erweitert werden.

## Patentansprüche

1. Telekommunikationsvorrichtung mit einem Endgerät (1) und einer Zusatzvorrichtung (2) zur Kopplung an eine Schnittstelle (4) des Endgeräts (1), die mindestens einen digitalen Ausgang (6) aufweist,
dadurch gekennzeichnet,
daß der digitale Ausgang (6) der Schnittstelle (4) zur Stromversorgung der Zusatzvorrichtung (2) dient.

2. Telekommunikationsvorrichtung nach Anspruch 1,
dadurch gekennzeichnet,
daß ein Schaltungsmodul (3) vorgesehen ist, das Mittel (11) zur Speicherung eines vom digitalen Ausgang (6) der Schnittstelle (4) gelieferten Stroms zur Erzeugung einer Versorgungsspannung (UB) für die Zusatzvorrichtung (2) enthält.

3. Telekommunikationsvorrichtung nach Anspruch 2,
dadurch gekennzeichnet,
daß die im Schaltungsmodul (3) erzeugte Versorgungsspannung (UB) zur Speisung eines Verstärkers (16) vorgesehen ist, der zur Verstärkung von Mikrophonsignalen eines Mikrophons (14) der Zusatzvorrichtung (2) dient.

4. Telekommunikationsvorrichtung nach einem der Ansprüche 1 bis 3,
dadurch gekennzeichnet,
daß als Schnittstelle (4) eine nach ETS 300 245, Teil 4, Abschnitt 5 genormte AEI-Schnittstelle vorgesehen ist.

5. Telekommunikationsvorrichtung nach einem der Ansprüche 2 bis 4,
dadurch gekennzeichnet,
daß die im Schaltungsmodul (3) erzeugte Versorgungsspannung (UB) zur Speisung eines Mikrophons (14) der Zusatzvorrichtung (2) dient.

6. Schaltungsmodul (3) zum Anschluß an eine mindestens einen digitalen Ausgang (6) aufweisende Schnittstelle (4) eines Telekommunikationsendgerätes (1) mit Mitteln (11) zur Speicherung eines vom digitalen Ausgang (6) gelieferten Stroms zur Erzeugung einer Versorgungsspannung (UB) für eine Zusatzvorrichtung (2) des Telekommunikationsendgerätes (1).
